# EUROPEAN PATENT APPLICATION

(11) **EP 2 775 582 A2**
(43) Date of publication of application: **10.09.2014**
(21) Application number: 13198256.3
(22) Date of filing: 19.12.2013
(51) Int. Cl.: H02J 5/00, H01F 38/14, H02J 7/00, H02J 7/02, H04M 1/02

(54) **Method and apparatus for wirelessly charging mobile devices**

(30) Priority: 06.03.2013 US 201313787482
(71) Applicant: Nokia Corporation, 02610 Espoo (FI)
(72) Inventor: Rautiainen, Jukka, 00530 Helsinki (FI); Kari, Juhani, 21420 Lieto (FI)
(74) Representative: Nokia Corporation

(57) **Abstract**

An apparatus comprising a connector, at least one cover member, and at least one wireless charging antenna is provided. The connector is configured to interface with at least a charging connector of a mobile device, and the at least one cover member is configured to extend away from the mobile device in an opened configuration. The at least one wireless charging antenna is physically coupled to the cover member and electrically coupled to the connector. The charging antenna is configured to receive a wireless transmission of electricity and to deliver the electricity via the connector to charge or power the mobile device.

## Description

### TECHNICAL FIELD

The present specification relates to mobile device covers, and more specifically, to removable covers that facilitate wireless charging of a mobile device.

### BACKGROUND

Wireless charging of mobile devices is convenient. Mobile devices, such as cellular phones and tablets, are increasingly being designed for wireless charging. The wireless charge receiving capability is typically integrated into the back of the device housing, e.g., the battery cover. Wireless charging involves close contact of the back side, e.g., within a few millimeters of a wireless charger. Typically, the mobile device is placed, backside down, directly on the charger.

However, users frequently protect these mobile devices with removable covers that inhibit wireless charging due to the thickness of the covers or the angles at which the devices are being used. For example, foldable covers support a device at a fixed angle position to facilitate use such as watching videos or typing. These fixed angle positions hold the back sides of the devices away from a wireless charger placed on a table or other flat surface. The distance from the charge receiver to the charge transmitter is further increased by the thickness of most device covers. If the cover involves materials, such as metals, between the wireless transmitter and receiver, charging will be blocked regardless of the cover's thickness. Thus, protecting a mobile device with a cover inhibits wirelessly charging a device with such integrated capabilities.

In addition, devices that do not have integrated wireless charging capabilities would benefit from this additional option. The growing infrastructure supporting wireless charging (e.g., increased availability of wireless chargers, public wireless hotspots) could also support legacy devices lacking integrated wireless charging capabilities.

### SUMMARY

The present specification discloses a method, system, and apparatus for wirelessly charging a mobile device.

In an example embodiment, an apparatus comprises a connector configured to interface with at least a charging connector of a mobile device and at least one cover member configured to extend away from the mobile device in an opened configuration. The apparatus further comprises at least one wireless charging antenna physically coupled to the cover member and electrically coupled to the connector. The charging antenna is configured to receive a wireless transmission of electricity and to deliver the electricity via the connector to charge or power the mobile device.

In another embodiment, an apparatus comprises a connector configured to interface with at least a charging connector of a mobile device and at least one cover member. The apparatus further comprises at least one wireless charging antenna physically coupled to the cover member and electrically coupled to the connector. The charging antenna is configured to receive a wireless transmission of electricity and to deliver the electricity via the connector to charge or power the mobile device.

Another example embodiment is directed to a method that comprises attaching a cover to a mobile device to electrically couple at least one wireless charging antenna of the cover to a charging connector of the mobile device. The cover is deployed to an opened configuration, and at least one member of the cover is placed proximate a charger that wirelessly provides electricity to the wireless charging antenna. In response thereto, the electricity is delivered to the mobile device to power or charge the mobile device.

The above summary is not intended to describe each disclosed embodiment or every implementation. For a better understanding of variations and advantages, reference should be made to the drawings which form a further part hereof, and to accompanying descriptive matter, which illustrate and describe representative embodiments.

### BRIEF DESCRIPTION OF THE DRAWINGS

In the following diagrams, the same reference numbers may be used to identify similar/same components in multiple figures.
FIGS. 1-2 are perspective views of a mobile device and cover according to example embodiments;
FIGS. 3-5 are perspective views of a folded cover wirelessly charging a mobile device in accordance with example embodiments;
FIG. 6-7A are perspective views of a cover wirelessly charging a mobile device in accordance with example embodiments;
FIG. 7B is a perspective view of a cover wirelessly charging more than one mobile device in accordance with an example embodiment;
FIG. 8 is a perspective view of a two-paneled cover in a reclined position in accordance with an example embodiment;
FIG. 9 is a perspective view of a two-paneled cover in an upright position in accordance with an example embodiment;
FIG. 10 is a perspective view of a two-paneled cover in an upright position in accordance with an example embodiment;
FIG. 11 is a perspective view of two-paneled cover in a reclined position in accordance with an example embodiment;
FIG. 12 is a perspective view of a single-paneled cover in an upright position accordance with an example embodiment;
FIG. 13 is a block diagram of an apparatus according to an example embodiment; and
FIG. 14 is a flow chart of a method in accordance with an example embodiment.

### DETAILED DESCRIPTION

In the following description of various example embodiments, reference is made to the accompanying drawings that form a part hereof, and in which is shown by way of illustration various example embodiments. It is to be understood that other embodiments may be utilized, as structural and operational changes may be made without departing from the scope of the invention.

Wireless charging involves transmitting electricity from a charger to a receiving device. A wireless power system includes a transmitter (e.g., a charging pad or primary energy source) and a receiver. Coils in both the charging device and the receiver are magnetically coupled when the two devices make contact. Power transfers from the transmitter to the receiver via coupled indicators (e.g., an air core transformer). The amount of power transferred is controlled by sending feedback communication (e.g., error signals) to the charger to increase or decrease power. The transmitter coil is powered off most of the time, occasionally waking to see if a receiver is present. When a receiver authenticates itself, the transmitter powers, and remains, on.

The wireless charger can comprise a variety of shapes and sizes. For example, the charger can be a small, rigid, flat transmitter (e.g., Nokia DT-900), a flexible pad, or incorporated into another accessory device such as a speaker. Another transmitting "device" can be hotspot incorporated into a table or other planar surface such as in public at a café or airport lounge. While the mobility of devices enables use in a variety of environments, this also increases exposure to damage.

Mobile device covers are used to protect both a user interface surface (e.g., a touchscreen) from scratching or other damage, as well as the housing and internal components from impacts or environmental factors. While mobile devices may be manufactured with attached, integrated covers, removable covers may also be attached after manufacture or purchase of a device. Typically, a cover includes a hinge to allow the cover to fold over a user interface surface in a closed position and extend away from the user interface surface in an open position. A cover can comprise one or more panels, and the panels may be of equal or differing sizes and shapes. Removable covers can attach directly to a mobile device with a variety of fasteners, including magnets. References throughout this specification to "attached" covers can include integrated or removable covers, unless otherwise specified.

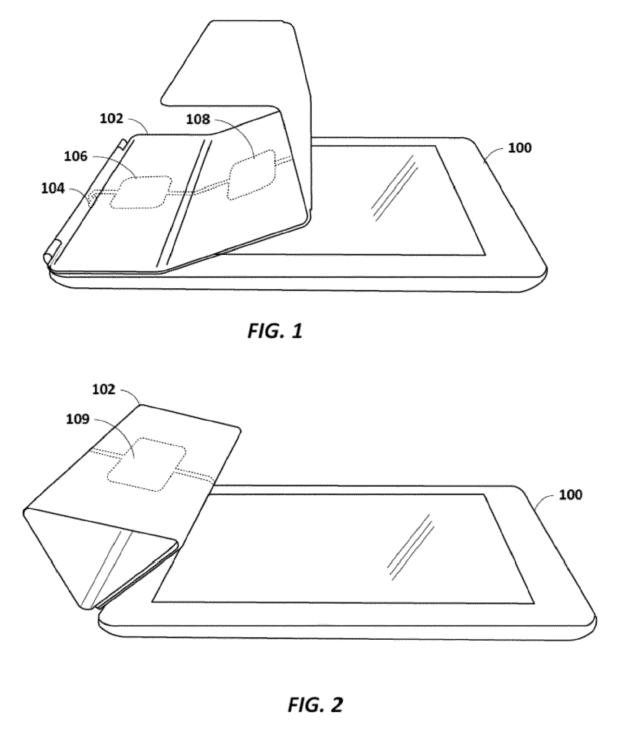

FIG. 1 illustrates a mobile device 100 with an attached cover 102 to protect a user interface portion, e.g., a touchscreen. Cover 102 includes a flexible sleeve that may optionally include a plurality of cover members or panels. The flexible sleeve acts as a hinge so that cover 102 may be folded, e.g., cover 102 may fold between the optional panels. A folded cover 102 can attain a variety of shapes to support mobile device 100 in a variety of positions. Cover 102 could be of a variety of sizes involving any number of panels depending on the size of the device with which the cover is designed to be used.

Embedded within the flexible sleeve is one or more connected receiving device. A first antenna 106 is integrated and connected with a second integrated antenna 108. Antennas 106 and 108 could be individual, multiplexed, or multi-looped. Also, additional antennas can be embedded opposite antennas 106 and 108 to enable charging from both sides of cover 102. Antennas 106 and 108 may be a variety of receiving devices that may also be used to transmit inductive energy from cover 102 to another device. Therefore antennas 106 and 108, as well as further receiving coils referred to throughout this specification, may be generally considered as an inductive energy coil. Integrated antennas 106 and 108 are connected to electronic circuitry for controlling wireless power transfer, not shown, but also embedded in the flexible sleeve of cover 102.

A connection between antennas 106 and 108 is illustrated in dashed lines. Antennas 106 and 108 can be interconnected within cover 102, individually connected directly to corresponding wireless charging circuitry within cover 102, or a combination thereof. The embedded circuitry and antennas 106 and 108 connect with mobile device 100 through connector 104. Connector 104 can be a standard connector (e.g., uUSB), a special connector, magnetic connector, pads, pins, etc. Connector 104 may also include a data connection such that a circuit embedded in cover 102 transmits status information for cover 102 to mobile device 100. The data connection may also be a separate connection that enables cover 102 to provide a user with status information or alerts regarding the charging status of cover 102. While not shown, cover 102 may include additional integrated receiving devices connected with antennas 106 and 108.

In addition, cover 102 may also include one or more integrated batteries. The batteries can be integrated into one or more optional panels. The integrated antennas 106 and 108 can be connected to one or more batteries integrated in cover 102. Antennas 106 and 108 can receive electricity to not only charge mobile device 100 through connector 104 but also charge the batteries. Thus, mobile device 100 can also be wirelessly charged via one or more embedded batteries. The above-discussed data connection can also provide status information on the one or more batteries.

Cover 102 can also include one or more contact points for contacting a wireless transmitter that may also have corresponding contact points. The contact points can be arranged in a pattern or design to facilitate the cover's use with a variety of different sized/shaped devices. The contact points may be used with a rigid or foldable cover to provide a "universal" device cover.

The folding of cover 102 is further illustrated in FIG. 2. While FIG. 1 illustrates an initial folding of cover 102 by extending cover 102 away from mobile device 100, FIG. 2 provides an example of how the cover may fold on to itself. Due to the hinging, cover 102 can fold over the attached portion of the cover 102 to form an overlapped portion with twice the thickness of flat cover 102. This overlapping provides further support for the mobile device 100 and may be held in place with magnetic materials in cover 102, e.g., in the flexible sleeve. As illustrated, cover 102, when folded in this manner, creates a triangular support for mobile device 100. As the cover 102 is extended away from the surface of mobile device 100, antenna 109 (opposing antenna 108) is exposed. Exposed antenna 109, or others, wirelessly receives electricity to charge mobile device 100.

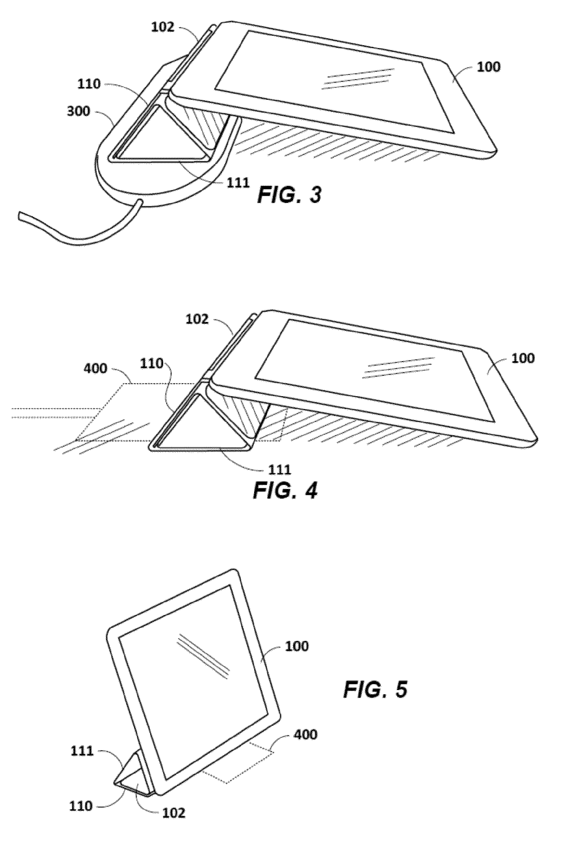

FIGS. 3-5 illustrate example configurations for wirelessly charging a device with a cover in a folded position. FIG. 3 shows mobile device 100 wirelessly charging using wireless charging pad 300. Wireless charging pad 300 includes a transmitter for wirelessly transmitting electricity to one or more receiving devices in cover 102. Similar to that shown in FIG. 2, cover 102 is folded such that section 110 overlaps section 113 to form a triangular support with section 111 as a base. With section 111 supporting mobile device 100 as a base section, mobile device 100 is positioned at a slight incline with the edge connected to cover 102 raised above a work surface and the opposing edge resting on the work surface. The height of the raised edge includes both the height of the folded cover 102 and the height of wireless charging pad 300. The slight incline facilitates use of the mobile device 100 such as for typing while mobile device 100 is charging. Section 111, with integrated antenna 108, is placed on, or in direct contact with, wireless charging pad 300. The integration of antenna 108 into folded cover 102, provides a wide, sturdy base for charging mobile device 100 such that small sized or thick chargers may be used. Cover 102 provides a balanced charge receiving surface.

FIG. 4 illustrates an alternative embodiment where folded cover 102 and mobile device 100 are in the same position as in FIG. 3. However, in FIG. 4 mobile device 100 is wirelessly charged using hotspot 400. Hotspot 400 is a wireless charging hotspot embedded in a planar work surface such as in a public locale. With the elimination of a separate device housing the charge transmitter, mobile device 100 is positioned with less of an incline where the raised edge is at the highest point of folded cover 102. When wirelessly charging using a hotpot, mobile device 100 can be moved around on hotspot 400 without interrupting the charging.

FIG. 5 shows mobile device 100 wirelessly charging at hotspot 400 in an upright position. Instead of section 111 providing a base of support, the combined sections 110 and 113 are placed on the work surface/hotspot 400 and mobile device 100 is folded up and back to rest against panel 112. The upright, supported position facilitates various uses such as viewing video or sharing content with others while also charging mobile device 100.

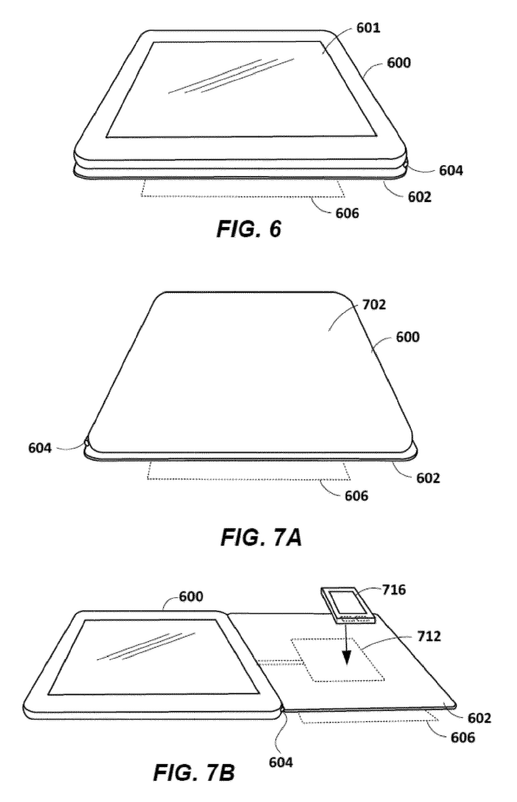

In alternative embodiments to the above-discussed folded cover, FIGS. 6-7B show a cover, with integrated one or more charge receiving devices, wirelessly charging one or more mobile devices. FIG. 6 illustrates a mobile device 600 with attached cover 602. Cover 602 can be rigid or flexible. While cover 602 is illustrated as a single panel, cover 602 could include any number of panels and could also be capable of folding as discussed above. Cover 602 includes hinge 604 and can attain an open or a closed position with respect to mobile device 600. In a closed position, cover 602 covers part or all of a user interface surface 601 of mobile device 600. For example, surface 601 may be a touchscreen. In an open position, the single panel of cover 602 folds away from surface 601 around hinge 604. As shown, cover 602 can fold completely back from hinge 604 such that cover 602 is parallel to the back of device 600.

Similar to the covers discussed above, the receiving devices integrated in cover 602 can be configured on both sides of cover 602 such that cover 602 can wirelessly charge in either the open or the closed position. In the open position, mobile device 600 is placed with cover 602 side down on hotspot 606 and the user interface surface 601 up. Thus, the open position for cover 602 enables use of mobile device 600 while the device is wirelessly charging.

Mobile device 600 can also be wirelessly charged with cover 602 in the closed position, as shown in FIG. 7A. Again, mobile device 600 is placed with cover 602 side down on hotspot 606; however, here the cover 602 protects user interface surface 601 and the back side 702 of mobile device 600 is facing up.

FIG. 7B illustrates the mobile device 600 in the same position as illustrated in FIG. 6 (user interface surface 601 side up), but with cover 602 open and contacting hotspot 606, not folded under mobile device 600. As discussed above, a charge receiving antenna integrated in a first side of cover 602 is placed over hotspot 606 and receives power from transmitting hotspot 606 to charge mobile device 600. However, the embedded antennas and corresponding electronic circuitry can support both wireless charging receiving and transmitting functionalities.

A second mobile device 716 can be placed on antenna 712 on a second side of cover 602 to wirelessly charge second mobile device 716. The antenna integrated in the first side of cover 602 receives power and supplies the power to mobile device 600 and/or batteries integrated in cover 602. Antenna 712 can receive power from one or both of mobile device 600 and batteries integrated in cover 602. Thus, the power received by antenna 712 is transmitted to charge second mobile device 716. Cover 602 may charge multiple devices at the same time. While FIGS. 6-7B are shown charging using a hotspot, the hotspot could be replaced with a wireless charging device as discussed above.

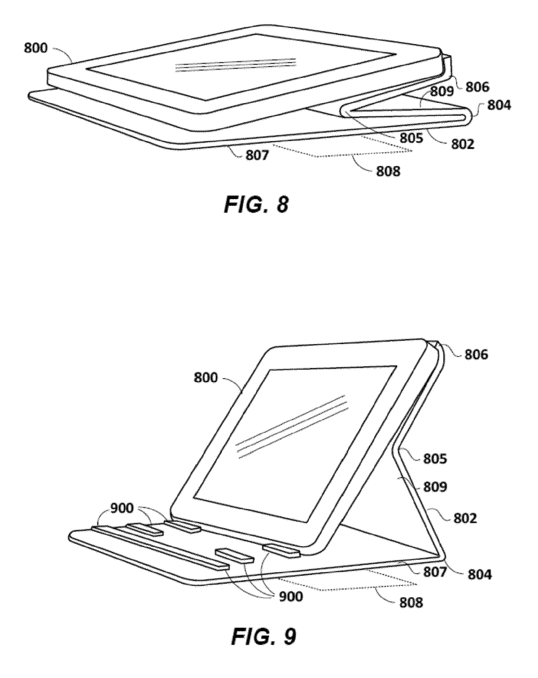

FIGS. 8-9 illustrate a wirelessly charging two-paneled cover with one or more charge receiving devices integrated into one panel. FIG. 8 illustrates the two-paneled cover in an open, reclined position with panel 807 including the integrated charge receiving device. Cover 802 is attached to mobile device 800 at end 806. In the reclined position, panel 809 is bent at sections 805 and 804. When cover 802 is closed, panel 807 folds around section 804 to protect the user interface surface of device 800. To wirelessly charge device 800 in the open, reclined position, panel 807 is placed on hotspot 808.

In an open, upright position, cover 802 maintains panel 807 on the hotspot 808. Here, panel 809 unfolds to varying degrees at sections 804 and 805. The degree to which panel 809 unfolds depends upon which support 900, of a plurality of supports 900, device 800 is propped against. Supports 900 are attached or integrated into panel 807 on the side opposing the side adjacent hotspot 808. Supports 900 are configured in a plurality of designs or patterns to provide a variety of upright positions and angles for device 800. While FIGS. 8-9 are shown charging using a hotspot, the hotspot could be replaced with a wireless charge transmitting device as discussed above.

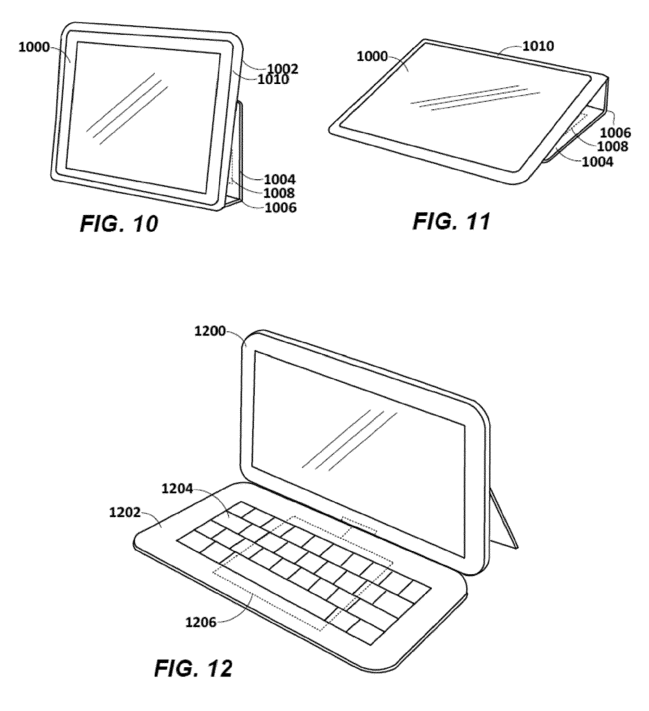

FIGS. 10-11 illustrate a wirelessly charging two-paneled cover with one or more charge receiving devices integrated into each panel. FIG. 10 illustrates the two-paneled cover 1010 in an open, upright position with panel 1006 including an integrated charge receiving device and positioned to contact a wireless charging transmitter. Panel 1004 extends upward, away from the transmitter to supports the back surface 1002 of mobile device 1000.

FIG. 11 illustrates cover 1010 in a reclined position. Here, panel 1004 is positioned adjacent a wireless charging device and charge receiving antenna 1008 receives the transmitted electricity. In a closed position, one or both panels 1006 and 1004 fold over to protect the user interface surface of mobile device 1000.

FIG. 12 shows a single-panel cover 1202 for wirelessly charging mobile device 1200. The single panel includes antenna 1206 connected to mobile device 1200 shown in dashed lines. Cover 1202 also includes an incorporated keypad 1204. To place mobile device 1200 in a hands-free upright position, a support piece on the back surface of mobile device 1200 is activated. The open position of cover 1202 enables use of keypad 1204 for typing while wirelessly charging mobile device 1200.

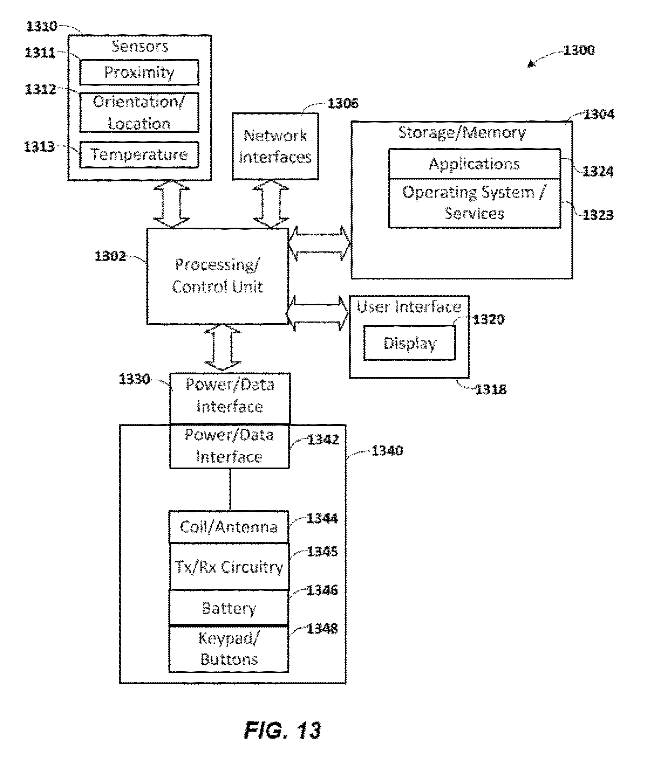

In reference now to FIG. 13, a block diagram illustrates an apparatus that includes a removable cover according to an example embodiment. The user apparatus 1300 of FIG. 13 is a representative example of a mobile device, although it will be understood that similar features may be implemented in a variety of mobile and non-mobile devices. The apparatus 1300 may include, for example, a mobile apparatus, mobile phone, mobile communication device, mobile computer, laptop computer, desktop computer, server, phone device, video phone, conference phone, television apparatus, digital video recorder (DVR), set-top box (STB), radio apparatus, audio/video player, game device, positioning device, digital camera/camcorder, and/or the like, or any combination thereof.

The processing unit 1302 controls the basic functions of the apparatus 1300. Those functions may be configured as instructions (e.g., software, firmware) stored in a program storage/memory 1304. The instructions may be provided via computer program product, computer-readable medium, and/or be transmitted to the mobile apparatus 1300 via data signals (e.g., downloaded electronically via one or more networks, such as the Internet and intermediate wireless networks). In the context of this document, a "computer-readable medium" may be any media or means that can contain, store, communicate, propagate or transport the instructions for use by or in connection with an instruction execution system, apparatus, or device, such as a computer. A computer-readable medium may comprise a computer-readable storage medium that may be any media or means that can contain or store the instructions for use by or in connection with an instruction execution system, apparatus, or device, such as a computer.

The mobile apparatus 1300 may include hardware and software components coupled to the processing/control unit 1302. The mobile apparatus 1300 includes one or more network interfaces 1306 for maintaining any combination of wired or wireless data connections. These network interfaces 1306 enable the apparatus 1300 to directly communicate with other devices, and/or join in one or more communication networks.

The processor 1302 is also coupled to user-interface hardware 1318 associated with the apparatus. The user-interface 1318 may include a display 1320, such as a light-emitting diode (LED) and/or liquid crystal display (LCD) device. The user-interface hardware 1318 also may include an input device capable of receiving user inputs. This may be integrated with the display 1320 (e.g., touchscreen) and/or include dedicated hardware switches. These and other user-interface components are coupled to the processor 1302 as is known in the art.

The mobile apparatus 1300 also includes sensors 1310 coupled to the processing/control unit 1302. These sensors 1310 may include a capacitive proximity sensor 1311, an orientation/location sensor 1312, and a temperature sensor 1313. The sensors 1310 are used to determine/establish context for the mobile apparatus 1300. These and other sensing devices are coupled to the processor 1302 as is known in the art.

The program storage/memory 1304 includes operating systems 1323 for carrying out functions and applications associated with functions on the mobile apparatus 1300. The program storage 1304 may include one or more of read-only memory (ROM), flash ROM, programmable and/or erasable ROM, random access memory (RAM), subscriber interface module (SIM), wireless interface module (WIM), smart card, hard drive, computer program product, and removable memory device. The storage/memory 1304 may also include interface modules such as operating system drivers, middleware, hardware abstraction layers, protocol stacks, and other software that facilitates accessing hardware such as user interface 1318, sensors 1310, and network hardware 1306.

The processing/control unit further includes a power/data interface 1330. Power/data interface 1330 can couple mobile apparatus 1300 to a cover 1340. The cover includes a corresponding power/data interface 1342 that connects mobile apparatus 1300 with components of the cover 1340. Example components of cover 1340 include one or more receiving coils/antennas 1344, wireless power receiving/transmitting circuitry 1345, one or more batteries 1346, and a keypad/buttons 1348. The cover 1340, via at least receiving coils/antennas 1344 and circuitry 1345, wirelessly charges mobile apparatus 1300.

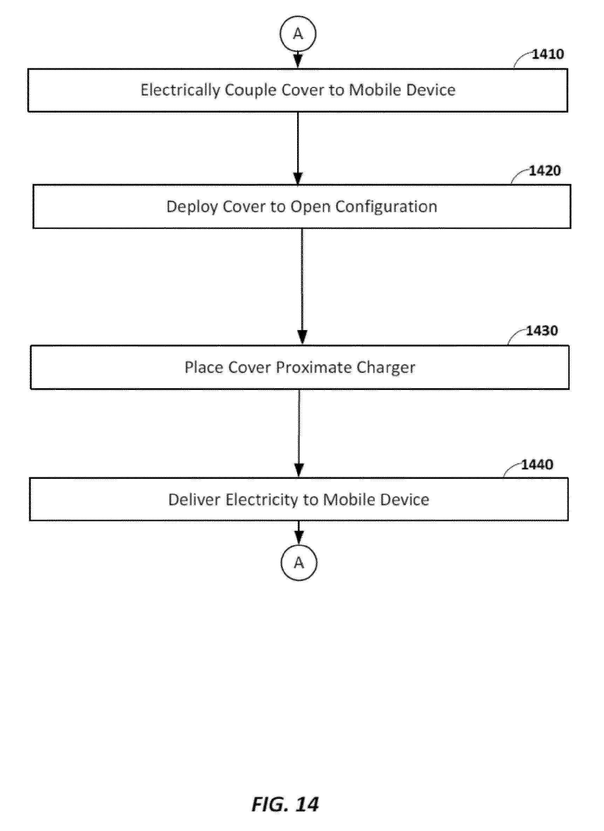

FIG. 14 illustrates a method for wirelessly charging a mobile device using an accessory cover. First, an accessory cover is coupled to a mobile device 1410. The cover may be coupled to the device with a variety of attaching members such as one or more magnetic, adhesive, or mechanical attaching members. The cover can also be coupled to the device using an electrical connection between the cover and the device. The cover is deployed to an open configuration 1420. The deployment can include extending the cover away from the mobile device and/or folding one or more sections of cover 102. The cover is placed proximate a charger 1430, and electricity is delivered to the mobile device 1440. The cover can be placed on a charging device or hotspot or within a predetermined distance such that receiving devices integrated into the cover wirelessly receive electricity from the charger. The electricity is then delivered to the mobile device from the cover.

The foregoing description of the example embodiments has been presented for the purposes of illustration and description. It is not intended to be exhaustive or to limit the embodiments to the precise form disclosed. Many modifications and variations are possible in light of the above teaching. It is intended that the scope be limited not with this detailed description, but rather determined by the claims appended hereto.

## Claims

1. An apparatus comprising:
a connector configured to interface with at least a charging connector of a mobile device;
at least one cover member configured to extend away from the mobile device in an opened configuration; and
at least one wireless charging antenna physically coupled to the at least one cover member and electrically coupled to the connector, the at least one charging antenna configured to receive a wireless transmission of electricity and to deliver the electricity via the connector to charge or power the mobile device.

2. The apparatus of claim 1, wherein the at least one cover member is configured to support the mobile device in an upright orientation in the opened configuration.

3. The apparatus of claim 1, wherein the at least one cover member is configured to cover a display of the mobile device in a closed configuration.

4. The apparatus of claim 1, wherein the at least one cover member comprises two or more hingeably coupled cover members, wherein the at least one wireless charging antenna comprises two or more wireless charging antennas each physically coupled to respective ones of the cover members.

5. The apparatus of claim 4, wherein the apparatus is capable of being moved between first and second orientations in the opened configuration, wherein a different one of the two or more wireless charging antennas is proximate a charger in the first and second orientations.

6. The apparatus of any preceding claim, further comprising a battery electrically coupled to at least the connector.

7. The apparatus of any preceding claim, further comprising a second charging antenna physically coupled to the at least one cover member and electrically coupled to the connector and configured to couple to a second charging connector of a second mobile device, the second charging antenna configured to deliver at least a portion of the electricity to the second mobile device via the second connector.

8. The apparatus of any preceding claim, wherein the connector is further configured to couple to a data connector of the mobile device, the apparatus further comprising a circuit coupled to the data connector and configured to provide status of the apparatus to the mobile device.

9. The apparatus of any preceding claim, wherein the at least one cover member is configured to support the mobile device in an upright orientation in an opened configuration while the apparatus is charging or powering the mobile device.

10. The apparatus of any of the claims 1 to 8, wherein the at least one cover member is configured to cover a display of the mobile device in a closed configuration while the apparatus is charging or powering the mobile device.

11. The apparatus of claim 5, wherein the apparatus is capable of being moved between first and second orientations in an opened configuration, wherein a different one of the two or more wireless charging antennas is proximate a charger in the first and second orientations.

12. The apparatus of any preceding claim, wherein the connector is configured to attach the apparatus to the mobile device.

13. A method comprising:
attaching a cover to a mobile device to electrically couple at least one wireless charging antenna of the cover to a charging connector of the mobile device;
deploying the cover to an opened configuration; and
placing at least one member of the cover proximate a charger that wirelessly provides electricity to the at least one wireless charging antenna, and in response thereto, delivering the electricity to the mobile device to power or charge the mobile device.

14. The method of claim 13, wherein deploying the cover comprises folding at least two hinged members of the cover, and wherein the cover supports the mobile device in an upright orientation in the opened configuration.

15. The method of claim 13, wherein deploying the cover comprises folding at least two hinged members of the cover, and wherein the cover supports the mobile device in a reclined orientation in the opened configuration.
